# EUROPÄISCHE PATENTSCHRIFT

(11) **EP 2 637 506 B1**
(45) Veröffentlichungstag und Bekanntmachung des Hinweises auf die Patenterteilung: **28.11.2018**
(21) Anmeldenummer: 11817294.9
(22) Anmeldetag: 11.10.2011
(51) Int. Cl.: A21C 9/08

(54) **VORRICHTUNG ZUM AUSRICHTEN VON GEWICKELTEN TEIGPRODUKTEN IN EINER DEFINIERTEN SCHLUSSLAGE**
APPARATUS FOR ORIENTING WOUND DOUGH PRODUCTS IN A DEFINED END POSITION
DISPOSITIF POUR ORIENTER DES PRODUITS À BASE DE PÂTE ENROULÉE DE FAÇON À PLACER LA POINTE FINALE DANS UNE POSITION DÉFINIE

(30) Priorität: 11.02.2011 DE 102011011049; 09.11.2010 DE 102010050671
(43) Veröffentlichungstag der Anmeldung: 18.09.2013
(60) Teilanmeldung: 17165893.3
(73) Patentinhaber: Fritsch GmbH, 97348 Markt Einersheim (DE)
(72) Erfinder: BERNHARDT, Udo, 97346 Iphofen (DE)
(74) Vertreter: advotec.
(86) Internationale Anmeldenummer: PCT/DE2011/001831
(87) Internationale Veröffentlichungsnummer: WO 2012/062267

(56) Entgegenhaltungen:
- DE-U1-202008 003 923
- NL-C2- 1 025 310

## Beschreibung

Die Erfindung betrifft eine Vorrichtung zum Ausrichten von gewickelten Teigprodukten, beispielsweise Croissants, in einer definierten Schlusslage.

Bei der industriellen Herstellung von gewickelten Teigprodukten, insbesondere Croissants, ist es gewünscht, dass beim Backen der gewickelten Teigwaren das außen am Umfang überstehende Ende des gewickelten Teigbandes, der so genannte Schluss, in einer definierten Lage liegt. Beispielsweise ist es beim Garen oder Backen von Croissants bevorzugt, dass der Schluss zwischen dem Croissant selbst und der Backunterlage angeordnet ist, um ein Aufstehen des Schlusses während des Backprozesses zu verhindern, da ein weitüberstehender Schluss leicht verbrennt und einen Qualitätsmangel darstellt. Insgesamt ist eine definierte Schlusslage bei gewickelten Teigprodukten grundsätzlich von Bedeutung, um reproduzierbare Backergebnisse zu ermöglichen. Für das Ausrichten von gewickelten Teigprodukten in einer definierten Schlusslage gibt es aus dem Stand der Technik verschiedene Möglichkeiten. In der einfachsten Variante werden die gewickelten Teigprodukte manuell um ihre Längsachse gedreht, wobei der Bediener durch diese Ausrichtbewegung eine definierte Schlusslage, bei der der Schluss beispielsweise unter dem Croissant zum Liegen kommt, einstellt. Diese manuelle Ausrichtung ist jedoch zeitaufwendig und arbeitsintensiv und deshalb nur für sehr kleine Stückzahlen geeignet.

Gemäß einem anderen Lösungsansatz wird versucht, die Teigprodukte in definierter Weise zu wickeln, so dass der Schluss des Teigproduktes am Ende des Wickelvorgangs die gewünschte definierte Schlusslage einnimmt. Ein solcher Lösungsansatz wird beispielsweise durch die EP 2 236 039 A1 beschrieben. Bei der dort beschriebenen Wickelvorrichtung kann die Länge der Wickelstrecke verändert werden, um auf diese Weise den Gesamtrotationswinkel während des Wickelns zu verändern. Nach Justierung der Wickelvorrichtung werden die Teigprodukte dann jeweils in gleicher Weise gewickelt und verlassen die Wickelvorrichtung in der gewünschten Schlusslage. Nachteilig an dieser Vorrichtung ist es, dass die Vorrichtung Prozessstörungen, wie sie beispielsweise durch Schwankungen der Dicke des zu wickelnden Teigstücks hervorgerufen werden, nicht ausgleichen kann. Insofern ist diese Vorrichtung sehr störungsanfällig und muss bei Auftreten von Prozessstörungen, beispielweise bei Änderungen der Dicke der Teigstücke, jeweils nachjustiert werden.

Eine weitere Vorrichtung zum schlusslagengenauen Ausrichten von gewickelten Teigprodukten ist aus der EP 1 747 724 A2 bekannt. Bei dieser Vorrichtung ist ein Sensor zur Detektion der Lage des Schlusses nach dem Wickeln des Teigproduktes vorhanden. Abhängig vom Messergebnis dieses Sensors wird das Teigprodukt anschließend um einen Winkelbetrag um seine Längsachse gedreht, um die gewünschte Schlusslage dadurch einzustellen. Prozessstörungen können von dieser Vorrichtung jederzeit erkannt und durch entsprechende Änderung des Drehwinkels ausreguliert werden. Nachteilig an dieser Vorrichtung ist jedoch der hohe gerätetechnische Aufwand, da beispielsweise eine Videokamera und ein Bildverarbeitungssystem zur Erkennung der Lage des Schlusses nach Ende des Wickelvorgangs notwendig ist.

Aus dem Stand der Technik ist zudem ein Ausrichtsystem mit einer Richtwalze zum Ausrichten von Croissants aus der DE 20 2008 003 923 U1, welche sämtliche Merkmale des Oberbegriffs der unabhängigen Ansprüche 1, 3 und 4 zeigt, bekannt, welches Ausrichtsystem mit einer berührungslosen Keramiksensorik zusammenwirkt. Dabei versetzt die Richtwalze das Teigstück in eine Rotation, währenddessen der Abstand zwischen dem Sensor und dem Teigstück permanent gemessen wird. Aus dieser Abstandsmessung wird dann die Lage des Teigstückschlusses abgeleitet und das Teigstück in einer definierten Lage des Teigstückschlusses angehalten. Nachteilig bei diesem Ausrichtsystem ist es jedoch, dass zur Feststellung der Lage des Teigstückschlusses eine entsprechende Sensorik vorhanden sein muss. Ausgehend von diesem Stand der Technik ist es deshalb Aufgabe der vorliegenden Erfindung, verschiedene Vorrichtungen zur Ausrichtung von gewickelten Teigprodukten in einer definierten Schlusslage vorzuschlagen, die mit einfachen Mitteln zuverlässig sind und dabei eine hohe Prozesssicherheit auch bei Störeinflüssen auf den Wickelprozess, beispielsweise verursacht durch Schwankungen der Dicke oder der Teigkonsistenz der zu wickelnden Teigstücke, ermöglichen.
Diese Aufgaben werden durch die Vorrichtungen gemäß den unabhängigen Hauptansprüchen gelöst.
Bevorzugte Ausführungsformen der Erfindung sind Gegenstand der Unteransprüche.
Die erfindungsgemäßen Vorrichtungen zum Ausrichten von gewickelten Teigprodukten in einer definierten Schlusslage beruhen auf dem Grundgedanken, dass das Teigprodukt durch Wickeln eines dreieckförmigen oder trapezförmigen Teigstücks hergestellt ist, dass das Teigprodukt von der Basis des Teigstücks her beginnend gewickelt ist, dass das schmalere Ende des Teigstücks einen außen am Umfang des Teigprodukts überstehenden Schluss bildet, und dass die Schlusslage des Teigprodukts durch eine bestimmte Lage des außen überstehenden Schlusses definierbar ist. Die Vorrichtungen beruhen des Weiteren auf dem Grundgedanken, dass der Rollwiderstand des gewickelten Teigprodukts eine Unstetigkeit aufweist, die durch den am Umfang des Teigprodukts überstehenden Schluss verursacht wird. Rollt nämlich das gewickelte Teigprodukt mit einem Drehsinn, der der Wickelrichtung bzw. der Förderrichtung des Teigstücks entspricht, über eine Unterlage, so steigt der Rollwiderstand signifikant an, sobald der überstehende Schluss auf der Unterlage zur Anlage kommt. Um das Teigprodukt nach Erreichen dieser Lage, in der der Schluss auf der Unterlage zur Anlage kommt, weiter abrollen zu können, muss das zum Antrieb des Teigprodukts vorgesehene Drehmoment bzw. die zum Antrieb vorgesehene Antriebskraft soweit erhöht werden, bis der Schwerpunkt des Teigprodukts um das Maß des Überstands des Schlusses angehoben ist. Dieses Ansteigen des Rollwiderstands beim Abrollen des Teigprodukts auf einer Unterlage nach Erreichen der Lage, in der der Schluss auf der Unterlage zur Anlage kommt, machen sich die erfindungsgemäßen Vorrichtungen zum Ausrichten der gewickelten Teigprodukte zu Nutze.

Es werden alternativ zueinander mehrere Vorrichtungen vorgeschlagen. Bei der ersten Vorrichtungsvariante ist zur Ausrichtung der gewickelten Teigprodukte eine geneigte Unterlage vorgesehen, auf der die gewickelten Teigprodukte unter der Wirkung der durch die Neigung verursachten Hangabtriebskraft abrollen. Der Neigungswinkel der Unterlage muss dabei so gewählt sein, dass zum einen die Hangabtriebskraft ausreichend groß ist, um die Abrollbewegung der gewickelten Teigstücke zu starten und bis zum Erreichen der Schlusslage, bei der der überstehende Schluss auf der Unterlage zur Anlage kommt, aufrechtzuerhalten. Umgekehrt muss der Neigungswinkel der Unterlage aber dahingehend begrenzt sein, dass die durch die Neigung verursachte Hangabtriebskraft nicht ausreicht, um eine Abrollbewegung über den überstehenden Schluss hinweg fortzusetzen. Vielmehr muss der vom überstehenden Schluss verursachte Rollwiderstand ausreichen, um die Abrollbewegung des gewickelten Teigstücks nach Anlage des Schlusses auf der Unterlage zuverlässig zu stoppen.

Um die Vorrichtung mit der geneigten Unterlage auf verschiedene Teigprodukte variabel anpassen zu können, ist es besonders vorteilhaft, wenn der Neigungswinkel der Unterlage einstellbar ist. Durch Erhöhung des Neigungswinkels kann die Hangabtriebskraft vergrößert bzw. durch Verringerung des Neigungswinkels verkleinert werden.

Bei den erfindungsgemäßen Vorrichtungen sind die gewickelten Teigprodukte entlang einer vorgegebenen Strecke oder für eine vorgegebene Zeit mit einem vorgegebenen Antriebsmoment bzw. einer vorgegebenen Antriebskraft um die Längsachse rotierend angetrieben, so dass die Produkte auf der Unterlage abrollen. Die Länge der Abrollstrecke bzw. die Dauer der Abrollzeit sollte dabei zumindest so groß gewählt werden, dass gewährleistet ist, dass die Teigprodukte zumindest eine volle Umdrehung auf der Unterlage abrollen können. Der Drehsinn der Abrollbewegung des Teigprodukts muss so gewählt werden, dass er der Wickelrichtung von innen nach außen des gewickelten Teigstücks entspricht. Denn bei Abrollen des Teigstücks in Wickelrichtung gelangt der überstehende Schluss des Teigstücks auf der Unterlage zur Anlage und hat die Wirkung eines Bremskeils. Sobald der überstehende Schluss auf der Unterlage zur Anlage kommt, hat das Teigprodukt damit die gewünschte definierte Schlusslage erreicht und wird durch den vom überstehenden Schluss verursachten Rollwiderstand gestoppt. Die die Rollbewegung verursachende Antriebskraft bzw. das die Rollbewegung verursachende Antriebsmoment muss dabei unterhalb einer vorgegebenen Grenze gewählt werden, so dass der vom Schluss verursachte Rollwiderstand nicht überwunden werden kann. Im Ergebnis werden die Teigprodukte also durch den vom überstehenden Schluss verursachten Rollwiderstand dadurch ausgerichtet, dass die Abrollbewegungen auf der Unterlage immer dann gestoppt werden, sobald der Schluss auf der Unterlage zur Anlage kommt. Auf eine Lagesensorik zur Bestimmung der Lage des Schlusses zu Beginn des Ausrichtprozesses kann dabei verzichtet werden, da die unterschiedlichen Anfangslagen des Schlusses durch entsprechend unterschiedliche Abrolllängen auf der Unterlage ausgeglichen werden. Da sich der Rollwiderstand des abrollenden Teigstücks durch den Überstand des Schlusses signifikant ändert, ist diese Änderung des Rollwiderstands zuverlässig geeignet, die Ausrichtung der Teigstücke zu bewirken, wobei auch Prozessstörgrößen, beispielsweise die Änderung der Teigdicke oder der Teigkonsistenz, keine Störung des Ausrichtprozesses verursachen.

Die Größe des Antriebsmoments bzw. der Antriebskraft zur Verursachung der Abrollbewegung des Teigprodukts auf der Unterlage ist auf den jeweiligen Ausrichtprozess abzustimmen. Das zum Antrieb der Teigprodukte vorgesehene Antriebsmoment bzw. die dazu vorgesehene Antriebskraft muss dabei jedenfalls so groß sein, dass das Teigprodukt nach dem Ende des Wickelprozesses in eine rotierende Abrollbewegung versetzt werden kann. Umgekehrt darf das Antriebsmoment bzw. die Antriebskraft nur so groß sein, dass die Abrollbewegung durch den vom Schluss verursachten Rollwiderstand zuverlässig gestoppt und nach Erreichen dieser definierten Schlusslage zuverlässig ausgeschlossen wird.

Die Antriebskraft zum Antrieb der Teigprodukte entlang der zum Ausrichten vorgesehenen Abrollstrecke ist gemäß einer ersten Ausführungsvariante eine Hangabtriebskraft. Dies bedeutet mit anderen Worten, dass die Teigprodukte auf einer geneigten Unterlage abrollen, wobei die Neigung der Unterlage zumindest so groß ist, dass die auf die gewickelten Teigprodukte wirkenden Hangabtriebskräfte ausreichen, um die Abrollbewegung auszulösen und aufrechtzuerhalten. Umgekehrt ist die Neigung der Unterlage aber nur so groß, dass die durch die Neigung verursachte Hangabtriebskraft nicht ausreicht, um den vom überstehenden Schluss verursachten Rollwiderstand zu überwinden, so dass die abrollenden Teigstücke durch die Anlage des Schlusses an der Oberseite der geneigten Unterlage zuverlässig gestoppt werden.

Alternativ zur ersten Vorrichtungsvariante wird auch eine Vorrichtung vorgeschlagen, bei der ein Bürstenantrieb zum Antrieb der gewickelten Teigprodukte entlang der Ausrichtstrecke vorgesehen ist. Der Bürstenantrieb ist dabei so zu gestalten und zu positionieren, dass die Borsten des Bürstenantriebs an den Teigprodukten vorbeistreichen und auf diese Weise die zum Abrollen der Teigprodukte notwendige Kraft durch Gleitreibung übertragen. Die insgesamt übertragene Gleitreibung muss dabei zum einen so groß sein, um die Abrollbewegung der Teigprodukte zu initiieren und aufrechtzuerhalten. Andererseits darf die Gleitreibung insgesamt nur so groß sein, dass die abrollenden Teigstücke durch Anlage des überstehenden Schlusses auf der Unterlage zuverlässig gestoppt werden.

Die Gesamtheit dieser Gleitreibungskräfte führt dabei zu einem Drehmoment, das die Abrollbewegung der Teigprodukte auf einer Unterlage, die dann beispielsweise auch horizontal verlaufen kann, bewirkt.

Um die Fördergeschwindigkeit der Teigstücke während des Ausrichtens durch die Abrollbewegung variabel verändern zu können, ist es besonders vorteilhaft, wenn die Unterlage, auf der die Teigprodukte zur Ausrichtung abrollen, in der Art eines umlaufend angetriebenen Förderbands ausgebildet ist.

Gemäß einer weiteren Alternative, die insbesondere auch für horizontal verlaufende Unterlagen geeignet ist, wird das für die Abrollbewegung der Teigprodukte notwendige Antriebsmoment durch eine Beschleunigung oder Abbremsung der gewickelten Teigprodukte erzeugt. Durch die Änderung der Geschwindigkeit der gewickelten Teigprodukte wirkt ein Drehmoment auf die Teigprodukte. Dieses Drehmoment kann als Antriebsmoment genutzt werden, um die Teigprodukte in der gewünschten Weise zur lagerichtigen Ausrichtung auf der Unterlage abrollen zu lassen.

Gemäß einer weiteren Vorrichtungsvariante ist es vorgesehen, dass die Vorrichtung ein erstes und ein zweites Förderband aufweist, die bevorzugt horizontal verlaufen und die jeweils mit unterschiedlichen Fördergeschwindigkeiten angetrieben werden können. Durch die Differenz der Fördergeschwindigkeiten ergibt sich bei der Übergabe der Teigprodukte vom ersten Förderband auf das zweite Förderband ein auf die Teigprodukte wirkendes Drehmoment, das für die gewünschte Abrollbewegung genutzt werden kann.

Das Abbremsen oder Beschleunigen der Teigprodukte ist dadurch erreichbar, dass die Teigprodukte von einem ersten Förderband auf ein zweites Förderband übergeben werden. Die Fördergeschwindigkeiten der beiden Förderbänder sind dabei unterschiedlich, so dass sich der gewünschte Beschleunigungs- oder Abbremseffekt ergibt. Auf diese Weise rollen die Teigprodukte auf dem zweiten Förderband solange in der gewünschten Drehrichtung ab, bis der Schluss auf der Unterlage zur Anlage kommt und dadurch das Teigprodukt abstoppt. Die Differenz der Fördergeschwindigkeiten der beiden Förderbänder sollte dabei maximal so groß sein, dass ein Überrollen des Schlusses während des Abrollens ausgeschlossen ist.

Erfindungsgemäß wird die Änderung des Rollwiderstands, die beim Abrollen des Teigstücks im Bereich des überstehenden Schlusses auftritt, zur Ausrichtung der Teigstücke in einer definierten Schlusslage genutzt. Um die Zuverlässigkeit dieser Ausrichtmethode weiter zu erhöhen, ist es besonders vorteilhaft, wenn das Teigstück vor dem Wickeln, insbesondere durch abschnittsförmiges Walzen, so umgeformt wird, dass der Schluss des Teigstücks eine Verdickung bildet. Dies bedeutet mit anderen Worten, dass die Dicke des Teigstücks im Bereich des Schlusses größer ist als der Rest des Teigstückes. Diese größere Dicke des Schlusses führt dazu, dass der Schluss weiter radial übersteht und dadurch ein entsprechend größerer Rollwiderstand verursacht wird. Dementsprechend kann dann das Teigstück bei der Abrollbewegung mit einem etwas größeren Antriebsmoment bzw. mit einer etwas größeren Antriebskraft angetrieben werden, da die Grenze, bei der das Teigstück auch über den überstehenden Schluss abrollen würde, entsprechend höher liegt.

Die Fördergeschwindigkeit des ersten Förderbandes und/oder die Fördergeschwindigkeit des zweiten Förderbandes sollte bevorzugt einstellbar, insbesondere variabel regelbar, sein, um das für die Abrollbewegung notwendige Drehmoment je nach Randbedingungen verändern zu können.

Mit den erfindungsgemäßen Vorrichtungen ist das Teigprodukt in einer definierten Schlusslage ausrichtbar, bei der der überstehende Schluss auf der Unterlage anliegt. Diese Schlusslage entspricht aber vielfach noch nicht der Schlusslage, die für die Weiterverarbeitung der Teigprodukte wünschenswert ist. Um diese zweite Schlusslage zu erreichen, ist es deshalb besonders vorteilhaft, wenn das Teigprodukt nach Erreichen der ersten definierten Schlusslage um einen definierten Winkelbetrag gerollt wird. Da aber die Winkellage der ersten definierten Schlusslage bekannt ist, kann zur Einstellung der zweiten definierten Schlusslage ein fest eingestellter Abrollwinkel benutzt werden.

Gemäß einer bevorzugten Vorrichtungsvariante ist das Teigprodukt von seiner ersten definierten Schlusslage, bei der der überstehende Schluss auf der Unterlage zur Anlage kommt, in eine zweite definierte Schlusslage rollbar, bei der der überstehende Schluss zwischen dem Teigstück und der Unterlage zum Liegen kommt. Diese zweite definierte Schlusslage ist besonders geeignet, um Croissants mit einem definierten Backergebnis zu produzieren.

Weiterhin ist es bevorzugt, wenn das gewickelte Teigprodukt in der zweiten Schlusslage zusammengedrückt wird und der Schluss des gewickelten Teigstücks zwischen dem Teigstück und der Unterlage so zusammengedrückt wird, dass der Schluss gegen den Umfang des gewickelten Teigstücks gedrückt und angelegt wird. Auf diese Weise kann eine besonders gleichmäßige und reproduzierbare Form des gebackenen Teigstücks realisiert werden, wobei gleichzeitig ein Verrollen des Teigstückes im weiteren Prozess verhindert wird.

Mittels der erfindungsgemäßen Vorrichtungen können gewickelte Teigprodukte, die vor dem Backen auch noch um ihre Hochachse gebogen werden, ohne manuelle Ausrichtung verarbeitet werden. Gemäß einer bevorzugten Vorrichtungsvariante ist es deshalb vorgesehen, dass das gewickelte Teigprodukt nach dem Ausrichten in einer Schlusslage um seine Hochachse zur Annäherung der beiden Spitzen des gewickelten Teigstücks gebogen wird. Insbesondere kann es dabei vorgesehen sein, dass die Spitzen des gewickelten Teigproduktes miteinander in Kontakt gebracht und beispielsweise miteinander verpresst werden, um die gebogene Form des gewickelten Teigproduktes zu fixieren.

Um die Teigprodukte nach der Ausrichtung in der ersten definierten Schlusslage, in der der Schluss auf der Unterlage zur Anlage kommt, in einer davon unterschiedlichen zweiten definieren Schlusslage ausrichten zu können, kann eine Justiereinrichtung nachgeschaltet werden. Die Justiereinrichtung ist dabei dadurch charakterisiert, dass sie die Teigprodukte ausgehend von der Lage in der ersten definierten Schlusslage um einen definierten Winkelbetrag rollt, um dadurch die zweite definierte Schlusslage einzustellen.

Alternativ bzw. additiv zu der Justiereinrichtung kann der Vorrichtung zur Ausrichtung der Teigstücke auch eine Flachdrückeinrichtung nachgeschaltet werden. In dieser Flachdrückeinrichtung werden die Teigstücke, die sich in einer Lage befinden, bei der der überstehende Schluss zwischen dem Teigstück und der Unterlage zum Liegen kommt, einstückweit zusammengedrückt, um auf diese Weise den Schluss gegen den Umfang des Teigstücks zu drücken, anzulegen und gleichzeitig die Lage auf dem Förderband zu fixieren.

Zum Justieren und Flachdrücken der gewickelten Teigstücke kann bevorzugt eine kombinierte Justier- und Flachdrückeinrichtung vorgesehen sein, die der Vorrichtung zum Ausrichten der Teigstücke in der definierten Schlusslage nachgeschaltet ist. Diese kombinierte Justier- und Flachdrückeinrichtung ist dabei in der Art eines umlaufend angetriebenen Flachdrückförderbands ausgebildet, das oberhalb der Unterlage zum Ausrichten der gewickelten Teigstücke angeordnet ist. Der Abstand zwischen der Unterlage und dem Flachdrückförderband verkleinert sich dabei in Transportrichtung der Teigstücke, so dass die Teigstücke durch diese Verengung kontinuierlich zusammengedrückt werden. Außerdem kann das Flachdrückförderband relativ zur Unterlage mit einer Differenzgeschwindigkeit angetrieben werden, um auf diese Weise eine Drehbewegung der Teigstücke zu verursachen. Die Differenzgeschwindigkeit ist dabei so zu wählen, dass sich im Ergebnis die gewünschte Winkeljustierung ergibt, mit der die Teigstücke aus der ersten definierten Schlusslage in die zweite definierte Schlusslage überführt werden.

Verschiedene Varianten der Erfindung werden in den Zeichnungen nachfolgend beispielhaft erläutert.

Es zeigen:
- Fig. 1: ein trapezförmiges Teigstück zur Herstellung eines gewickelten Teigprodukts, nämlich eines Croissants, in Ansicht von oben;
- Fig. 2: das Teigstück gemäß Fig. 1 nach dem Walzen gemäß einer ersten Variante;
- Fig. 3: das Teigstück gemäß Fig. 1 nach dem Walzen gemäß einer zweiten Variante;
- Fig. 4: das aus dem Teigstück gemäß Fig. 1 gewickelte Teigprodukt in Ansicht von oben;
- Fig. 5: das gewickelte Teigstück gemäß Fig. 4 im schematisierten Querschnitt;
- Fig. 6: eine erste Vorrichtung zum Ausrichten des gewickelten Teigprodukts gemäß Fig. 4 in einer definierten Schlusslage;
- Fig. 7: eine zweite Vorrichtung zum Ausrichten des gewickelten Teigprodukts gemäß Fig. 4 in einer definierten Schlusslage;
- Fig. 8: eine dritte Vorrichtung zum Ausrichten des gewickelten Teigprodukts gemäß Fig. 4 in einer definierten Schlusslage;
- Fig. 9: eine schematisiert dargestellte Produktionslinie zur Herstellung von Croissant-Rohlingen, die eine Vorrichtung gemäß Fig. 6 umfasst.

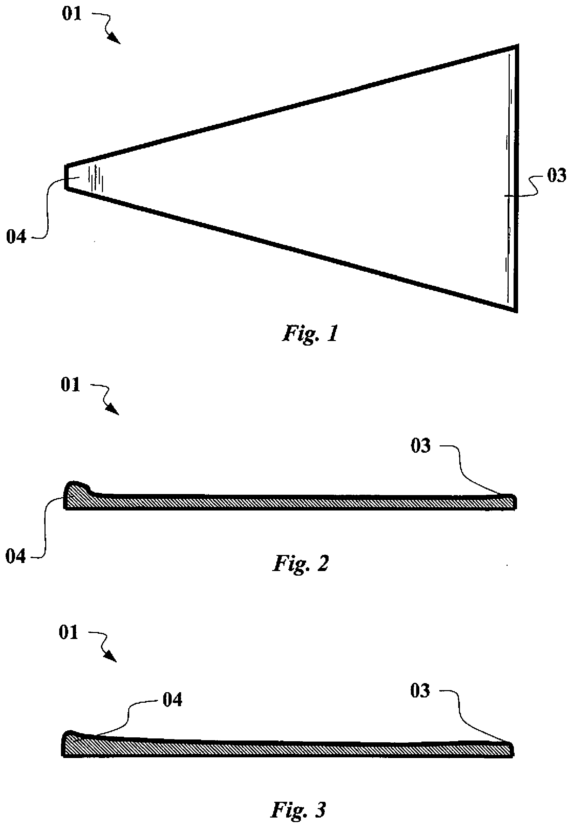

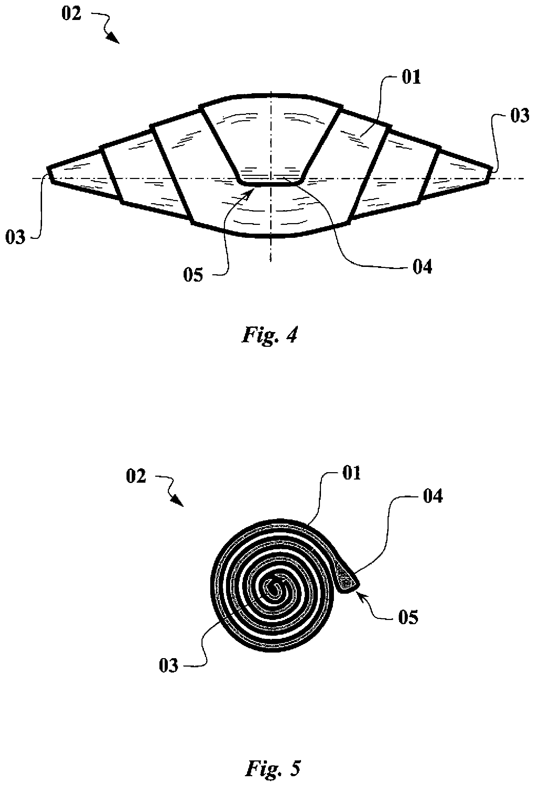

Fig. 1 zeigt ein trapezförmiges Teigstück 01, aus dem ein gewickeltes Teigprodukt 02 (siehe Fig. 4) hergestellt werden kann. Das Teigstück 01 weist eine Basis 03 und ein schmales Ende 04 auf. Durch diese trapezförmige Form des Teigstücks 01 kann beim Wickeln des Teigstücks 01 um die Basis 03 herum eine Wickelform erreicht werden, wie sie der gewohnten Form von Croissants entspricht. Das schmale Ende 04 kann dabei auch etwas breiter oder ganz spitz sein.

Fig. 2 und Fig. 3 zeigen das Teigstück 01 jeweils im Querschnitt, wobei sich Fig. 2 und Fig. 3 durch zwei verschiedene Varianten beim Auswalzen des Teigstücks vor dem Wickeln unterscheiden. Bei der in Fig. 2 dargestellten Variante wird das Teigstück 01, dessen Dicke zunächst der Dicke im Bereich des schmalen Endes 04 entspricht, entlang seiner Längserstreckung mit einer gleichmäßigen Dicke ausgewalzt, so dass das schmale Ende 04 nach dem Walzen eine Verdickung bildet. Bei der Variante gemäß Fig. 3 wird die Walze zum Auswalzen des Teigstücks 01 in Richtung des schmalen Endes 04 langsam angehoben, so dass sich die Dicke des Teigstücks 01 in Richtung des schmalen Endes 04 kontinuierlich vergrößert. Aber auch hier bildet das schmale Ende 04 die maximale Verdickung des Teigstücks 01.

Fig. 4 zeigt das aus dem Teigstück 01 gewickelte Teigprodukt 02, das die Form eines ungebogenen Croissants aufweist. Den Kern des Teigprodukts 02 bildet die Basis 03, um die das Teigstück 01 herumgewickelt wird. Das schmale Ende 04 bildet am Außenumfang des Teigprodukts 02 einen überstehenden Schluss 05.

Fig. 5 zeigt das Teigprodukt 02 im Querschnitt. Man erkennt die Basis 03 im Zentrum des Teigprodukts 02 und den überstehenden Schluss 05, der von der Verdickung des schmalen Endes 04 des Teigstücks 01 gebildet wird.

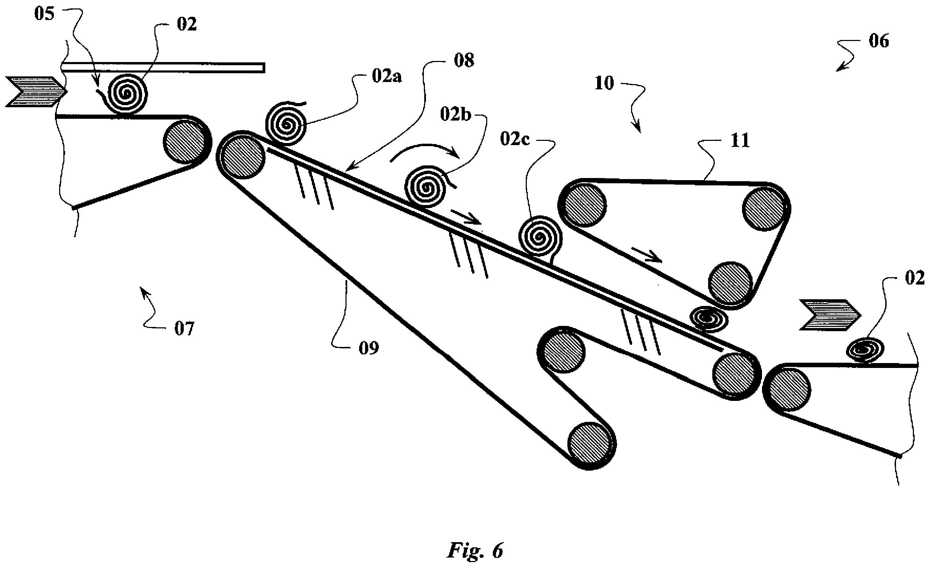

Fig. 6 zeigt eine Vorrichtung 06 zum Ausrichten der Teigprodukte 02 in einer definierten Schlusslage. In einer der Vorrichtung 06 vorgeschalteten Wickelvorrichtung 07 werden aus Teigstücken 01 Teigprodukte 02 gewickelt, wobei die Lage des Schlusses 05 bei Verlassen der Wickelvorrichtung 07 undefiniert ist. Die Teigstücke 02 werden von der Wickelvorrichtung 07 an die nachgelagerte Vorrichtung 06 mit undefinierter Schlusslage übergeben. Die Vorrichtung 06 umfasst dabei eine geneigte Unterlage 08, die von einem umlaufenden Förderband 09 gebildet wird. Sobald ein Teigprodukt 02 auf die Unterlage 08 übergeben ist, beginnt das Teigprodukt 02 auf der Unterlage abzurollen, wobei die Abrollbewegung durch die von der Neigung der Unterlage 08 verursachte Hangabtriebskraft gestartet und aufrechterhalten wird. Die Neigungsrichtung der Unterlage 08 ist dabei so auf die Wickelrichtung von innen nach außen der Teigprodukte 02 abgestimmt, dass in der dargestellten Ausführungsform das Teigprodukt 02 eine Wickelrichtung im Uhrzeigersinn aufweist und die Teigprodukte 02 auf der geneigten Unterlage 08 in Uhrzeigersinn abrollen. Auf diese Weise wird gewährleistet, dass der überstehende Schluss 05 nach einer nicht vordefinierten Abrollstrecke auf der Unterlage 08 zur Anlage kommt und damit die erste definierte Schlusslage einnimmt. Das Teigprodukt 02c zeigt das Teigprodukt 02 nach Erreichen dieser definierten Schlusslage. Durch die Anlage des überstehenden Schlusses 05 auf der Unterlage 08 wird die Abrollbewegung des Teigprodukts 02 abgestoppt, wobei die Neigung der Unterlage 08 nicht ausreicht, um das Teigprodukt 02 über den überstehenden Schluss 05 hinwegrollen zu lassen.

Nach dem Ausrichten der Teigstücke 02 ist außerdem noch ein Justieren der Schlusslage und ein Flachdrücken der Teigstücke vorgesehen. Dazu kommt eine kombinierte Justier- und Flachdrückeinrichtung 10 zum Einsatz, die von einem umlaufenden Förderband 11 gebildet wird. Das Förderband 11 ist dem Förderband 09 gegenüberliegend angeordnet, wobei der Abstand zwischen dem Förderband 11 und dem Förderband 09 in Transportrichtung der Teigstücke 02 enger wird. Durch diesen sich verengenden Spalt werden die Teigstücke 02 hindurchgefördert. Aufgrund einer Differenzgeschwindigkeit beim Umlauf des Förderbandes 11 gegenüber der Umlaufgeschwindigkeit des Förderbandes 09 werden die Teigstücke dabei um einen festgelegten Winkelbetrag gedreht, so dass die Teigstücke 02 beim Verlassen der Vorrichtung 10 eine zweite definierte Schlusslage einnehmen.

Die Umlaufgeschwindigkeit des Förderbandes 09 ist dabei größer als die Umlaufgeschwindigkeit des Förderbandes 11, so dass das Teigstücke 02 beim Justieren in der zweiten Schlusslage nicht über den Schluss 05 hinwegrollt, sondern in Gegenrichtung drehend, im dargestellten Beispiel also gegen den Uhrzeigersinn, bewegt wird. Dadurch wird die Bildung von Falten im Teigstück beim Justieren der zweiten Schlusslage ausgeschlossen. In dieser zweiten definierten Schlusslage wird der Schluss 05 zwischen dem Teigstück 02 und der Unterlage 08 positioniert und in dieser Lage gegen das Teigstück 02 gedrückt. Nach Verlassen der Vorrichtung 10 werden die Teigstücke 02 in der zweiten definierten Schlusslage zur Weiterverarbeitung weitergefördert.

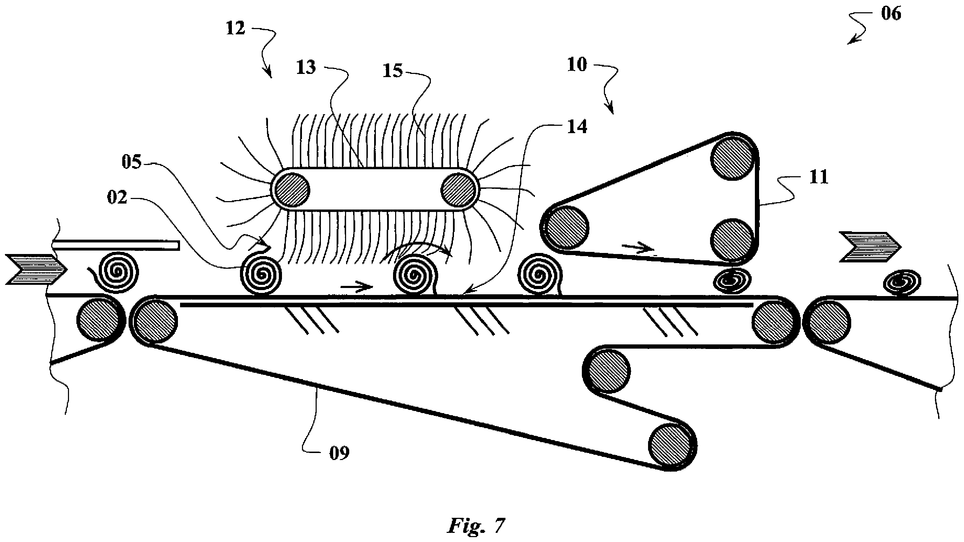

Fig. 7 zeigt eine zweite Vorrichtung 12 zum Ausrichten der Teigstücke 02 in der ersten definierten Schlusslage. Nach dem Wickeln der Teigstücke 02 in der Wickelvorrichtung 07 werden diese wiederum an die nachgeordnete Vorrichtung 12 übergeben, in der ein umlaufender Bürstenantrieb 13 vorgesehen ist, um die Teigstücke 02 auf der Unterlage 14, die horizontal ausgerichtet ist, abrollend anzutreiben. Die zunächst noch mit undefinierter Schlusslage positionierten Teigstücke 02 gelangen dabei in Gleitreibungskontakt mit den Borsten 15 des Bürstenantriebs 13, wobei durch die unterschiedlichen Antriebsgeschwindigkeiten des Förderbands 09 und des Bürstenantriebs 13 eine Gleitreibungskraft auf die Teigstücke 02 übertragen wird, die die Teigstücke 02 im Uhrzeigersinn auf der Unterlage 14 abrollen lässt. Die Teigstücke 02 rollen dabei solange auf der Unterlage 14 ab, bis der überstehende Schluss 05 auf der Unterlage 14 zur Anlage kommt und dadurch die Abrollbewegung abstoppt. Die Länge der Bürsten in Förderrichtung sollte länger sein, als der Umfang des Croissants. Die Länge des Bürstenantriebs ist bevorzugt so gewählt, dass die Bürsten nach etwas mehr als einer Umdrehung des Croissants außer Eingriff kommen. Damit hat das Teigstück 02 die definierte erste Schlusslage erreicht und wird anschließend mit der Vorrichtung 10 wiederum kombiniert justiert und zusammengedrückt.

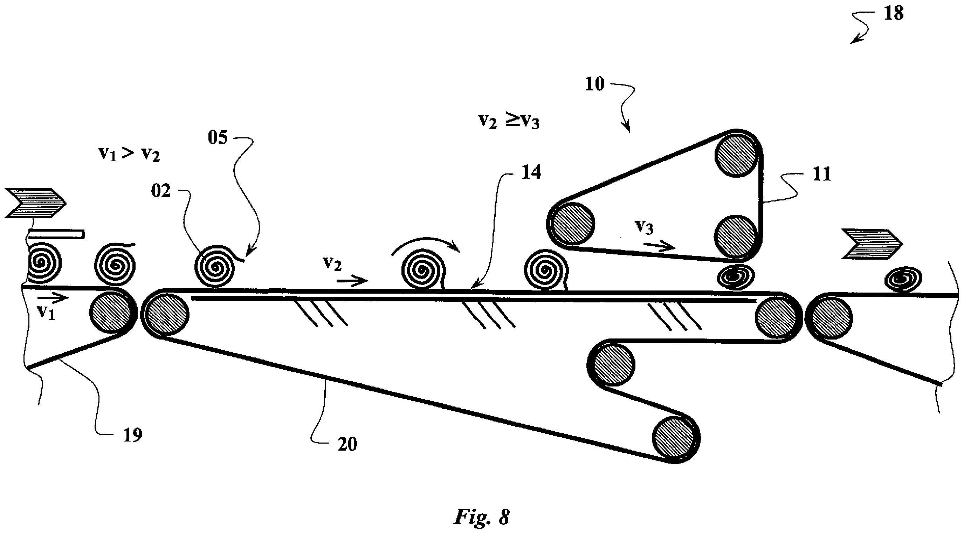

Fig. 8 zeigt eine dritte Vorrichtung 18 mit zwei Förderbändern 19 und 20. Die Fördergeschwindigkeit v₁ des Förderbandes 19 ist dabei höher, beispielsweise doppelt so hoch, als die Fördergeschwindigkeit v₂ des Förderbandes 20. Aufgrund dieser Differenz der Fördergeschwindigkeiten v₁ und v₂ ergibt es sich, dass die Teigstücke 02 bei der Übergabe vom Förderband 19 auf das Förderband 20 abgebremst werden. Durch diese Abbremsung der Teigstücke 02 wirkt ein Drehmoment auf die Teigstücke 02, das die Teigstücke im Uhrzeigersinn auf dem Förderband 20 abrollen lässt, bis der Schluss 05 auf der Unterlage zur Anlage kommt. Die Fördergeschwindigkeiten v₁ und v₂ der Förderbänder 19 und 20 können variabel verändert, insbesondere variabel geregelt, werden, um Drehsinn und Stärke des auf die Teigstücke 02 wirkenden Drehmoments variable verändern zu können. Wahlweise kann die Fördergeschwindigkeit v₁ des zuführenden Förderbandes größer oder kleiner als die Fördergeschwindigkeit v₂ des nachgelagerten abnehmenden Förderbandes sein.

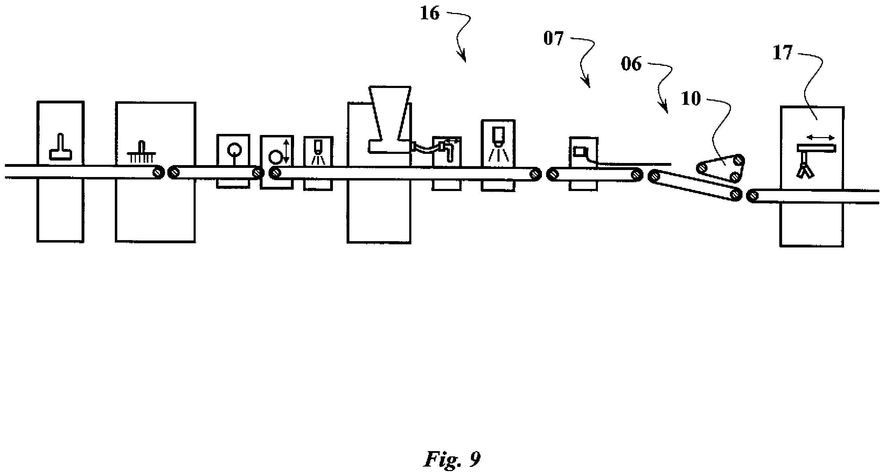

Fig. 9 zeigt eine Produktionslinie 16 zur Herstellung von Croissants. Nach Durchlaufen diverser Bearbeitungsstationen werden die Teigstücke 01 in einer Wickelvorrichtung 07 zur Herstellung von gewickelten Teigprodukten 02 bearbeitet. Daran anschließend werden die Teigstücke 02 mit zunächst noch undefinierter Schlusslage in der Vorrichtung 06 ausgerichtet und mittels der Vorrichtung 10 justiert und flachgedrückt. Anschließend können die Teigprodukte 02 mit nun definierter Schlusslage mittels eines Greifersystems 17 um ihre Längsachse gebogen werden.

## Patentansprüche

1. Vorrichtung zum Ausrichten von gewickelten Teigprodukten (02) in einer definierten Schlusslage,
wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definierbar ist,
**dadurch gekennzeichnet,**
**dass** die Vorrichtung (06) eine geneigte Unterlage (08) aufweist, auf der die Teigprodukte (02) entlang einer vorgegebenen Strecke oder für eine vorgegebene Zeit rotierend angetrieben von der durch die Neigung verursachten Hangabtriebskraft abrollen können, wobei der Drehsinn der Abrollbewegung des Teigprodukts (02) der Wickelrichtung von innen nach außen des gewickelten Teigstücks (01) entspricht, wobei der Neigungswinkel der Unterlage (08) so klein ist, dass die Abrollbewegung der Teigprodukte (02) nach Erreichen der Schlusslage, bei der der Schluss (05) des gewickelten Teigprodukts (02) auf der Unterlage (08) anliegt, durch den vom Schluss (05) verursachten Rollwiderstand auch bei fortwirkender Hangabtriebskraft ausgeschlossen ist und stoppt.

2. Vorrichtung nach Anspruch 1,
**dadurch gekennzeichnet,**
**dass** der Neigungswinkel der Unterlage (08) einstellbar ist.

3. Vorrichtung zum Ausrichten von gewickelten Teigprodukten (02) in einer definierten Schlusslage,
wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definierbar ist,
**dadurch gekennzeichnet,**
**dass** die Vorrichtung (12) einen umlaufenden Bürstenantrieb (13) umfasst, dessen Borsten (15) an den Teigprodukten (02) entlang einer vorgegebenen Strecke oder für eine vorgegebene Zeit rotierend vorbei gleitend angetrieben werden, um die für die Abrollbewegung der Teigprodukte (02) notwendigen Kraft durch Gleitreibung zu übertragen, wobei der Drehsinn der Abrollbewegung des Teigprodukts (02) der Wickelrichtung von innen nach außen des gewickelten Teigstücks (01) entspricht, wobei die von den Borsten (15) insgesamt übertragene Gleitreibungskraft so klein ist, dass eine Rollbewegung der Teigprodukte (02) nach Erreichen der Schlusslage, bei der der Schluss (05) des gewickelten Teigprodukts (02) auf der Unterlage (14) anliegt, durch den vom Schluss (05) des gewickelten Teigprodukts (02) verursachten Rollwiderstand auch bei fortwirkender Gleitreibungskraft ausgeschlossen ist und stoppt.

4. Vorrichtung zum Ausrichten von gewickelten Teigprodukten (02) in einer definierten Schlusslage,
wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definierbar ist,
**dadurch gekennzeichnet,**
**dass** die Vorrichtung (18) ein erstes mit einer ersten Fördergeschwindigkeit (v₁) umlaufendes Förderband (19) und ein zweites mit einer davon unterschiedlichen zweiten Fördergeschwindigkeit (v₂) umlaufendes Förderband (20) aufweist, wobei die gewickelten Teigprodukte (02) entlang einer vorgegebenen Strecke oder für eine vorgegebene Zeit rotierend angetrieben und aufgrund der Differenz zwischen der ersten Fördergeschwindigkeit (v₁) und der zweiten Fördergeschwindigkeit (v₂) bei der Übergabe vom ersten Förderband (19) auf das zweite Förderband (20) beschleunigt oder abgebremst und dadurch in die gewünschte Abrollbewegung versetzt werden, wobei der Drehsinn der Abrollbewegung des Teigprodukts (02) der Wickelrichtung von innen nach außen des gewickelten Teigstücks (01) entspricht, wobei die Differenz zwischen der ersten Fördergeschwindigkeit (v₁) und der zweiten Fördergeschwindigkeit (v₂) so klein ist, dass eine Rollbewegung der Teigprodukte (02) nach Erreichen der Schlusslage, bei der der Schluss (05) des gewickelten Teigprodukts (02) auf der Unterlage anliegt, durch den vom Schluss (05) des gewickelten Teigprodukts (02) verursachten Rollwiderstand ausgeschlossen ist und stoppt.

5. Vorrichtung nach Anspruch 4,
**dadurch gekennzeichnet,**
**dass** die Fördergeschwindigkeit (v₁) des ersten Förderbandes (19) und/oder die Fördergeschwindigkeit (v₂) des zweiten Förderbandes (20) einstellbar, insbesondere regelbar, ist.

## Claims

1. A device for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
**characterised in that**
the device (06) has an inclined support (08) on which the dough products (02) can be driven so as to rotate and can roll along a predefined segment or for a predefined time, driven by the downhill slope force caused by the inclination, wherein the rotational direction of the rolling motion of the dough product (02) corresponds to the winding direction from the inside to the outside of the wound dough piece (01), wherein the inclination angle of the support (08) is so small that, after the dough products have reached the end position in which the end (05) of the wound dough product (02) abuts on the support (08), the rolling motion of the dough products (02) is precluded due to the rolling resistance caused by the end (05) in spite of a continuing downhill slope force and is stopped.

2. The device according to claim 1,
**characterised in that**
the inclination angle of the support (08) is adjustable.

3. A device for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
**characterised in that**
the device (12) comprises a circulating brush drive (13) whose bristles (15) are driven to rotate and slide past the dough products (02) along a predefined segment or for a predefined time so as to transmit by sliding friction the force necessary for the rolling motion of the dough products (02), wherein the rotational direction of the rolling motion of the dough product (02) corresponds to the winding direction from the inside to the outside of the wound dough piece (01), wherein the overall sliding friction force transmitted by the bristles (15) is so small that, after the dough products have reached the end position in which the end (05) of the wound dough product (02) abuts on the support (14), a rolling motion of the dough products (02) is precluded due to the rolling resistance caused by the end (05) of the wound dough product (02) in spite of a continuing sliding friction force and is stopped.

4. A device for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
**characterised in that**
the device (18) has a first conveyor belt (19) circulating with a first conveying speed (v₁) and a second conveyor belt (20) circulating with a second conveying speed (v₂) which is different from the first conveying speed, wherein the wound dough products (02) are driven along a predefined segment or for a predefined time so as to rotate and are accelerated or decelerated when being transferred from the first conveyor belt (19) to the second conveyer belt (20) due to the difference between the first conveying speed (v₁) and the second conveying speed (v₂) and thereby are set in the desired rolling motion, wherein the rotational direction of the rolling motion of the dough product (02) corresponds to the winding direction from the inside to the outside of the wound dough piece (01), wherein the difference between the first conveying speed (v₁) and the second conveying speed (v₂) is so small that, after the dough product has reached the end position in which the end (05) of the wound dough product (02) abuts on the support, a rolling motion of the dough products (02) is precluded due to the rolling resistance caused by the end (05) of the wound dough product (02) and is stopped.

5. The device according to claim 4,
**characterised in that**
the conveying speed (v₁) of the first conveyor belt (19) and/or the conveying speed (v₂) of the second conveyor belt (20) is adjustable, in particular controllable.

## Revendications

1. Dispositif destiné à aligner des produits de pâte (02) enroulés dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définissable par une position spécifique du bout (05) faisant saillie à l'extérieur,
**caractérisé en ce que**
le dispositif (06) a un support (08) incliné sur lequel les produits de pâte (02) peuvent rouler le long d'un trajet prédéterminé ou pour un temps prédéterminé en étant entraînés de manière rotative par la force de déclivité causée par l'inclinaison, le sens de rotation du mouvement de roulement du produit de pâte (02) correspondant à la direction d'enroulement de l'intérieur vers l'extérieur de la pièce de pâte (01) enroulée, l'angle d'inclinaison du support (08) étant si petit qu'après que les produits de pâte ont atteint la position finale dans laquelle le bout (05) du produit de pâte (02) enroulé repose sur le support (08), le mouvement de roulement des produits de pâte (02) est empêché par la résistance au roulement causée par le bout (05) malgré la force de déclivité persistante et s'arrête.

2. Dispositif selon la revendication 1,
**caractérisé en ce que**
l'angle d'inclinaison du support (08) est ajustable.

3. Dispositif destiné à aligner des produits de pâte (02) enroulés dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définissable par une position spécifique du bout (05) faisant saillie à l'extérieur,
**caractérisé en ce que**
le dispositif (12) comprend un entraînement de brosse (13) circulant dont les poils (15) sont entraînés de manière à glisser de manière rotative devant les produits de pâte (02) le long d'un trajet prédéterminé ou pour un temps prédéterminé afin de transmettre la force nécessaire pour le mouvement de roulement des produits de pâte (02) par frottement de glissement, le sens de rotation du mouvement de roulement du produit de pâte (02) correspondant à la direction d'enroulement de l'intérieur vers l'extérieur de la pièce de pâte (01) enroulée, la force de frottement de glissement transmise au total par les poils (15) étant si faible qu'après que les produits de pâte ont atteint la position finale dans laquelle le bout (05) du produit de pâte (02) enroulé repose sur le support (14), un mouvement de roulement des produits de pâte (02) est empêché par la résistance au roulement causée par le bout (05) du produit de pâte (02) enroulé malgré une force de frottement de glissement persistante et s'arrête.

4. Dispositif destiné à aligner des produits de pâte (02) enroulés dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définissable par une position spécifique du bout (05) faisant saillie à l'extérieur,
**caractérisé en ce que**
le dispositif (18) a une première bande transporteuse (19) circulant à une première vitesse de transport (v₁) et une deuxième bande transporteuse (20) circulant à une deuxième vitesse de transport (v₂) qui diffère de la première vitesse de transport, les produits de pâte (02) enroulés étant entraînés de manière rotative le long d'un trajet prédéterminé ou pour un temps prédéterminé et étant accélérés ou décélérés lors du transfert à partir de la première bande transporteuse (19) à la deuxième bande transporteuse (20) à cause de la différence entre la première vitesse de transport (v₁) et la deuxième vitesse de transport (v₂) et ainsi étant mis en mouvement de roulement désiré, le sens de rotation du mouvement de roulement du produit de pâte (02) correspondant à la direction d'enroulement de l'intérieur vers l'extérieur de la pièce de pâte (01) enroulée, la différence entre la première vitesse de transport (v₁) et la deuxième vitesse de transport (v₂) étant si faible qu'après que les produits de pâte ont atteint la position finale dans laquelle le bout (05) du produit de pâte (02) enroulé repose sur le support, un mouvement de roulement des produits de pâte (02) est empêché par la résistance au roulement causée par le bout (05) du produit de pâte (02) enroulé et s'arrête.

5. Dispositif selon la revendication 4,
**caractérisé en ce que**
la vitesse de transport (v₁) de la première bande transporteuse (19) et/ou la vitesse de transport (v₂) de la deuxième bande transporteuse (20) sont ajustables, notamment réglables.
